# EUROPÄISCHE PATENTSCHRIFT

(11) **EP 1 506 115 B1**
(45) Veröffentlichungstag und Bekanntmachung des Hinweises auf die Patenterteilung: **09.11.2005**
(21) Anmeldenummer: 03730073.8
(22) Anmeldetag: 19.05.2003
(51) Int. Cl.: B64D 11/00

(54) **KRAFTUNTERSTÜTZUNGSMODUL ZUR BEREITSTELLUNG EINER LASTABHÄNGIGEN UNTERSTÜTZUNGSKRAFT**
FORCE SUPPORTING MODULE FOR PROVIDING A LOAD-DEPENDENT SUPPORTING FORCE
MODULE DE SERVO-ASSISTANCE DESTINE A FOURNIR UNE FORCE D'ASSISTANCE EN FONCTION D'UNE CHARGE

(30) Priorität: 17.05.2002 DE 10222125
(43) Veröffentlichungstag der Anmeldung: 16.02.2005
(73) Patentinhaber: Aircabin GmbH, 88471 Laupheim (DE)
(72) Erfinder: GRAF, Oleg, 89257 Illertissen (DE); POBERSCHNIGG, Ralf, 90513 Zirndorf (DE)
(74) Vertreter: Beyer, Andreas
(86) Internationale Anmeldenummer: PCT/EP2003/005255
(87) Internationale Veröffentlichungsnummer: WO 2003/097457

(56) Entgegenhaltungen:
- DE-A- 19 617 657
- DE-C- 4 446 772

## Beschreibung

Die Erfindung betrifft ein Kraftunterstützungsmodul zur Bereitstellung einer lastabhängigen Unterstützungskraft. Insbesondere betrifft die Erfindung ein solches Kraftunterstützungsmodul zur Verwendung in Verbindung mit einem absenkbaren Überkopf-Gepäckfach in einem Passagierflugzeug.

Absenkbare Überkopf-Gepäckfächer in Flugzeugen sind bekannt. So beschreibt z.B. die DE 41 30 644 C2 ein absenkbares Überkopf-Gepäckfach eines Passagierflugzeuges mit Führungssystemen in Form von Gelenkvierecken an jeder Seitenwand des Gepäckfaches und einer Gasdruckfeder für jedes Führungssystem, die entsprechend dem Gewicht des Gepäckfaches eine Unterstützungskraft zum Hochschwenken des Gepäckfachs liefert. Eine Verstelleinrichtung erfasst während des Beladens das Gewicht des Gepäckfachs und wirkt über eine Verstellverbindung auf den Kraftangriffspunkt der Gasdruckfeder ein, um eine dem jeweiligen Beladegewicht des Gepäckfaches entsprechende Einstellung zu erzielen.

Aus der DE 43 35 151 C2 ist ein absenkbares Überkopf-Gepäckfach bekannt, welches ebenfalls an seinen beiden Seitenwänden je ein Führungssystem mit einer zugeordneten Gasfeder aufweist. Die Gasfeder steht mit einer Unterstützungseinrichtung in Wirkverbindung, die eine dem Gewicht des Gepäckfaches angepasste Unterstützungskraft für das Hochschwenken des Gepäckfachs bereitstellt. Eine Blockiereinrichtung ermöglicht eine Verriegelung der Unterstützungseinrichtung.

Die DE 44 46 772 C1 schließlich beschreibt eine Vorrichtung zum Führen eines absenkbaren Überkopf-Gepäckfaches mit zwei beidseitig an den Seitenwänden des Gepäckfaches angeordneten Gelenkvierecken und einem Federsystem je Gelenkviereck zur Unterstützung der Hochschwenkbewegung des Gepäckfaches. Eine innerhalb des Gepäckfaches angeordnete Waageplatte wirkt auf unterhalb der Waageplatte angeordnete Druckgeber, die ihrerseits über mindestens eine Verstellverbindung mit einem Verstellzylinder verbunden sind, der auf eine Verstelleinrichtung zum Verschieben des Kraftangriffspunktes des Federsystems einwirkt, um ihn in Abhängigkeit vom Gewicht des Gepäckfachs zu verschieben, so dass ein dem Lastmoment, das aus dem Gewicht des Gepäckfachs resultiert, angepasstes entgegenwirkendes Drehmoment bereitgestellt wird.

Grundsätzlich besteht bei einem absenkbaren Überkopf-Gepäckfach der Wunsch, dass die zum Öffnen und Schließen des Gepäckfaches erforderlichen Handkräfte unabhängig vom Beladungszustand des Gepäckfachs zumindest in etwa gleich bleiben und Werte aufweisen, die auch von einer schwächeren Person noch ohne weiteres aufgebracht werden können. Die aus dem Stand der Technik bekannten, diesem Zweck dienenden Vorrichtungen sind relativ kompliziert aufgebaut und damit potentiell störanfällig.

Der Erfindung liegt die Aufgabe zugrunde, eine verbesserte Vorrichtung anzugeben, die unter anderem dazu geeignet ist, in Verbindung mit einem absenkbaren Überkopf-Gepäckfach eines Flugzeuges eine vom Beladungszustand des Gepäckfaches abhängige Unterstützungskraft bereitzustellen.

Diese Aufgabe ist erfindungsgemäß mit einem Kraftunterstützungsmodul gelöst, das die im Patentanspruch 1 angegebenen Merkmale aufweist. Das erfindungsgemäße Kraftunterstützungsmodul hat ein Gehäuse, in dem ein Federsystem zur Erzeugung einer Unterstützungskraft angeordnet ist, dessen eines Ende im Gehäuse um eine Achse schwenkbar angelenkt ist und dessen entgegengesetztes anderes Ende einen Kraftangriffspunkt für die Unterstützungskraft festlegt. Am oder in der Nähe des Kraftangriffspunktes ist eine Kraftübertragungseinrichtung befestigt, die Unterstützungskraft an einen von dem Kraftunterstützungsmodul entfernten Ort übertragen kann. Auf einer im Gehäuse drehbar gelagerten Abstützung befindet sich eine Bahn, längs derer der Kraftangriffspunkt zwischen einem ersten Endpunkt und einem zweiten Endpunkt hin- und her verschiebbar ist. Eine Verstelleinrichtung, die mit der drehbaren Abstützung und einem Lastsensor zusammenwirkt, verdreht die Abstützung in Abhängigkeit der von dem Lastsensor festgestellten Last und verändert damit den Winkel zwischen der Kraftangriffsrichtung der Unterstützungskraft im Kraftangriffspunkt und der Kraftübertragungseinrichtung, um so das Maß der auf die Kraftübertragungseinrichtung wirkenden Unterstützungskraft der festgestellten Last anzupassen. Mit anderen Worten, je weiter die drehbare Abstützung aus einer Ausgangsstellung verdreht wird, desto kleiner wird der Winkel zwischen der Kraftangriffsrichtung der Unterstützungskraft im Kraftangriffspunkt und der Kraftübertragungseinrichtung, so dass der in Richtung der Kraftübertragungseinrichtung wirkende Kraftvektor und damit die auf die Kraftübertragungseinrichtung übertragene Unterstützungskraft größer wird. Da die Abstützung vorzugsweise stufenlos verdrehbar ist, passt sich auch die auf die Kraftübertragungseinrichtung wirkende Unterstützungskraft stufenlos der festgestellten Last an.

Der Lastsensor kann ein mechanischer Sensor sein, vorzugsweise ist er jedoch ein elektrischer Sensor, beispielsweise ein nach dem Dehnungsmessstreifenprinzip arbeitender Sensor.

In bevorzugten Ausführungsformen des erfindungsgemäßen Kraftunterstützungsmoduls ist das die Unterstützungskraft erzeugende Federsystem eine Gasdruckfeder. Als Gasdruckfeder kann eine starr verriegelbare Gasdruckfeder zum Einsatz kommen, mittels der das Kraftunterstützungsmodul in jeder beliebigen Arbeitsstellung verriegelt, d.h. arretiert werden kann. Eine solche starr verriegelbare Gasdruckfeder weist ein von außen ansteuerbares Ventil auf, mit dem das Hydrauliksystem der Gasdruckfeder abgesperrt werden kann. Eine so verriegelte Gasdruckfeder kann Kräften von bis zu 10.000 N widerstehen, ohne ihre Hubstellung zu ändern. Vorzugsweise kann auf diese Weise eine Schließstellung des Kraftunterstützungsmoduls sicher arretiert werden.

Gemäß einer vorteilhaften Ausgestaltung des Kraftunterstützungsmoduls ist ein Schlitten mit dem kraftabgebenden Ende des Federsystems verbunden, der auf der von der Abstützung bereitgestellten Bahn hin- und her verschiebbar ist. An dem Schlitten ist die Kraftübertragungseinrichtung befestigt. Vorzugsweise ist der Schlitten so ausgeführt, dass er auf der Bahn abrollen kann. Hierzu kann der Schlitten beispielsweise eine oder mehrere Rollen aufweisen. Der Schlitten ermöglicht es auf vorteilhafte Art und Weise, den Kraftangriffspunkt der Unterstützungskraft und die Befestigung der Kraftübertragungseinrichtung nahe zusammenzubringen. Vorzugsweise befinden sich der Kraftangriffspunkt der Unterstützungskraft und der Befestigungspunkt der Kraftübertragungseinrichtung auf einer gemeinsamen, durch den Schlitten verlaufenden Achse, die die Kraftangriffsrichtung der Unterstützungskraft im rechten Winkel schneidet. Der Schlitten, der sich normalerweise erst dann bewegt, wenn ein Benutzer des Kraftunterstützungsmoduls die mit der Kraftübertragungseinrichtung verbundene Last bewegt, kann gemäß einer Ausgestaltung auch motorisch bewegt werden, d.h. motorisch entlang der Bahn verfahren werden. Bei einer solchen Ausgestaltung muss ein Benutzer des Kraftunterstützungsmoduls überhaupt keine Kraft aufbringen, wenn die mit der Kraftübertragungseinrichtung verbundene Last bewegt werden soll. Stattdessen bewegt sich der Schlitten selbsttätig in Abhängigkeit von Signalen entlang der Bahn, die ihm bzw. dem ihn antreibenden Motor von einer Steuerung zugeführt werden. Ist die mit der Kraftübertragungseinrichtung verbundene Last beispielsweise ein absenkbares Gepäckfach, kann ein Sensor oder Schalter am Griff des Gepäckfaches eine Öffnungsbewegung feststellen und die Steuerung veranlassen, den Schlitten entlang der Bahn in die Offenstellung zu verfahren. Analog kann die Steuerung dann, wenn durch einen Sensor ein Schließwunsch festgestellt wird, den Schlitten entlang der Bahn in die Schließstellung verfahren lassen.

Bei allen Ausführungsformen des erfindungsgemäßen Kraftunterstützungsmoduls entspricht vorzugsweise der erste Endpunkt auf der von der Abstützung bereitgestellten Bahn einer Offenstellung und der zweite Endpunkt einer Schließstellung. Wird das erfindungsgemäße Kraftunterstützungsmodul zusammen mit einem absenkbaren Überkopf-Gepäckfach verwendet, befindet sich das Gepäckfach demnach in seiner abgesenkten, offenen Stellung, wenn sich der Kraftangriffspunkt im Kraftunterstützungsmodul am ersten Endpunkt befindet. In analoger Weise befindet sich das Gepäckfach in seiner Schließstellung, wenn der Kraftangriffspunkt im Kraftunterstützungsmodul sich am zweiten Endpunkt befindet.

Gemäß einer vorteilhaften Ausgestaltung erfolgt eine Verdrehung der Abstützung im Kraftunterstützungsmodul mittels der Verstelleinrichtung nur dann, wenn sich der Kraftangriffspunkt in dem ersten Endpunkt befindet, d.h. eine Verdrehung der Abstützung erfolgt nur in einer der Offenstellung des Kraftunterstützungsmoduls entsprechenden Position. Dem liegt die Annahme zugrunde, dass sich der Beladungszustand eines Gepäckfaches nur in der Offenstellung ändern kann. Selbstverständlich ist es im Zusammenhang mit einem anderen Einsatzzweck auch möglich, eine Verdrehung der Abstützung an jeder zwischen dem ersten und dem zweiten Endpunkt liegenden Stelle durchzuführen.

Bei einer besonders bevorzugten Ausführungsform des erfindungsgemäßen Kraftunterstützungsmoduls liegen der Kraftangriffspunkt der Unterstützungskraft, der erste Endpunkt der Bahn und der Drehpunkt der die Bahn bereitstellenden Abstützung auf einer gemeinsamen Achse. Bei einer Ausführungsform, bei der eine Verdrehung der Abstützung nur im ersten Endpunkt erfolgt, bedeutet dies, dass eine Verdrehung der Abstützung vorgenommen werden kann, ohne dass eine Stauchung oder Streckung des Federsystems erfolgt. Die Verdrehung der Abstützung erfordert deshalb nur eine sehr geringe Kraft und folglich nur sehr wenig Energie.

Die von der drehbaren Abstützung bereitgestellte Bahn ist bei einer Ausführungsform des erfindungsgemäßen Kraftunterstützungsmoduls eine kreisringsektorförmige Bahn. Bei einer anderen Ausführungsform ändert sich die Form der Bahn in Abhängigkeit der Verdrehung der Abstützung.

Vorzugsweise ist die Form der Bahn bei keiner Last oder bei geringen Lasten kreisringsektorförmig und wird mit zunehmender Last immer geradliniger. Bei maximaler Last ist die Bahn dann vorzugsweise eine Gerade.

Wenn die Form der Bahn sich in Abhängigkeit der Verdrehung der Abstützung ändert, besteht die Bahn vorteilhafterweise aus mehreren gelenkig miteinander verbundenen Abschnitten, und eine relativ zur Abstützung verschiebbare und mit den Abschnitten verbundene Steuerplatte verändert die Position der einzelnen Abschnitte zueinander in Abhängigkeit der Verdrehung der Abstützung. Bei einer bevorzugten Ausgestaltung ist die Steuerplatte auf der Abstützung zwangsgeführt, beispielsweise durch von der Abstützung in entsprechende Kulissen der Steuerplatte ragende Stifte. Die Zwangsführung bewirkt, dass sich die Steuerplatte bei einer Drehung der Abstützung relativ zur Abstützung verschiebt, so dass sich die Form der Bahn in einer gewünschten Weise ändert. Bei der vorgenannten Ausgestaltung kann die Steuerplatte selbst einen Abschnitt der Bahn bilden.

Die Verstelleinrichtung des erfindungsgemäßen Kraftunterstützungsmoduls umfasst in einer bevorzugten Ausführungsform einen Spindeltrieb, der durch die Drehung seiner Spindel die Abstützung hin- und her verdreht. Zum Antrieb der Spindel wird vorzugsweise ein Elektromotor verwendet, der in einer vorteilhaften Ausgestaltung ein Schrittmotor ist. Ein Elektromotor und insbesondere ein Schrittmotor lässt sich präzise und reproduzierbar ansteuern, so dass ein vorgegebenes lastabhängiges Verhalten des Kraftunterstützungsmoduls über lange Zeiträume eingehalten wird. Des weiteren sind Elektromotoren robust und reaktionsschnell und sie eignen sich darüber hinaus ideal zur Ansteuerung mit Signalen, die von einem elektrischen Sensor stammen, gegebenenfalls unter Zwischenschaltung eines entsprechenden Steuergerätes. Da gemäß bevorzugter Ausführungsformen des Kraftunterstützungsmoduls die zur Verdrehung zur Abstützplatte benötigte Kraft nur gering ist, können zudem kleine und damit leichte Elektromotoren zum Einsatz kommen. Die Kraftübertragungseinrichtung des erfindungsgemäßen Kraftunterstützungsmoduls kann beispielsweise ein Gestänge oder auch eine Kette sein. Gemäß einer bevorzugten Ausführungsvariante ist die Kraftübertragungseinrichtung jedoch ein Seil. Die Kraftübertragungseinrichtung ist mit ihrem einen Ende im Kraftunterstützungsmodul an oder in der Nähe des Kraftangriffspunktes der Unterstützungskraft und mit ihrem anderen Ende an dem Gegenstand befestigt, an dem die Unterstützungskraft wirken soll. Ein solcher Gegenstand kann z.B. ein absenkbares Überkopf-Gepäckfach eines Flugzeuges sein.

Bei einigen Ausführungsformen des erfindungsgemäßen Kraftunterstützungsmoduls bleibt das Maß der auf die Kraftübertragung wirkenden Unterstützungskraft bei einer Verschiebung des Kraftangriffspunktes der Unterstützungskraft zwischen dem ersten Endpunkt und dem zweiten Endpunkt gleich. Auf diese Weise ist sichergestellt, dass die Betätigungskraft, die ein mit dem Kraftunterstützungsmodul verbundener Gegenstand erfordert, während der gesamten Bewegung aus der Schließ- in die Offenstellung und umgekehrt gleich bleibt. Bei alternativen Ausführungsformen nimmt das Maß der auf die Kraftübertragungseinrichtung wirkenden Unterstützungskraft bei einer Verschiebung des Kraftangriffspunktes von dem ersten Endpunkt zum zweiten Endpunkt zu. Damit wird erreicht, dass die zur Bewegung eines mit dem Kraftunterstützungsmodul verbundenen Gegenstandes erforderliche Betätigungskraft immer geringer wird, je mehr man sich der Schließstellung nähert. Die Abstimmung kann so getroffen sein, dass das Maß der auf die Kraftübertragungseinrichtung wirkenden Unterstützungskraft kurz vor Erreichen des zweiten Endpunktes der festgestellten Last entspricht oder sie geringfügig übertrifft. Das hat zur Folge, dass der mit dem Kraftunterstützungsmodul verbundene Gegenstand seine Schließstellung selbsttätig einnimmt, sich also beispielsweise ein Gepäckfach selbsttätig schließt, nachdem es von einem Benutzer bis in die Nähe der Schließstellung bewegt worden ist.

Es versteht sich, dass durch eine entsprechende Auslegung des Federsystems nahezu jede beliebige Unterstützungskraft erzielt werden kann. Das bedeutet, dass die Betätigungskraft, die zur Bewegung eines mit dem Kraftunterstützungsmodul verbundenen Gegenstandes erforderlich ist, in der Praxis frei wählbar ist, indem die vom Kraftunterstützungsmodul mittels der Kraftübertragungseinrichtung auf den Gegenstand übertragene Unterstützungskraft entsprechend festgelegt wird.

Das Gehäuse des erfindungsgemäßen Kraftunterstützungsmoduls besteht vorzugsweise aus zwei im Abstand voneinander gehaltenen Platten, zwischen denen das Federsystem, die drehbare Abstützung und die Verstelleinrichtung als wichtigste Bauteile des Moduls angeordnet sind. Auf diese Weise wird ein flach bauendes und dennoch gut geschütztes Modul erhalten, das an vielen Einbauorten zum Einsatz kommen kann.

Das erfindungsgemäße Kraftunterstützungsmodul eignet sich hervorragend für ein absenkbares Überkopf-Gepäckfach eines Flugzeuges, ist darüber hinaus aber auch für eine Vielzahl anderer Verwendungen geeignet, bei denen eine von einer Endstellung in einer andere Endstellung erfolgende Bewegung eines Gegenstandes kraftunterstützt werden soll.

Ein bevorzugtes Ausführungsbeispiel eines erfindungsgemäßen Kraftunterstützungsmoduls wird im Folgenden anhand der beigefügten, schematischen Zeichnungen näher erläutert. Es zeigt:
- Fig. 1: ein erfindungsgemäßes Kraftunterstützungsmodul, das hinter der Rückseite eines Überkopf-Gepäckfaches eines Flugzeuges montiert ist und das mittels einer Kraftübertragungseinrichtung in Gestalt eines Seils eine Unterstützungskraft auf das Überkopf-Gepäckfach überträgt,
- Fig. 2: eine Draufsicht des Kraftunterstützungsmoduls bei geöffnetem Gehäuse in einer Stellung, die einem unbeladenen und offenen Zustand des Überkopf-Gepäckfaches entspricht,
- Fig. 3: die Ansicht gemäß Fig. 2 in einer Stellung, die einem unbeladenen und geschlossenen Überkopf-Gepäckfach entspricht,
- Fig. 4: die Ansicht gemäß Fig. 2 in einer Stellung, die einem voll beladenen und offenen Überkopf-Gepäckfach betrifft,
- Fig. 5: die Ansicht gemäß Fig. 2 in einer Stellung, die einem voll beladenen und geschlossenen Überkopf-Gepäckfach entspricht,
- Fig. 6: eine Draufsicht auf eine Steuerplatte des erfindungsgemäßen Kraftunterstützungsmoduls, und
- Fig. 7: eine Seitenansicht der Steuerplatte aus Fig. 6.

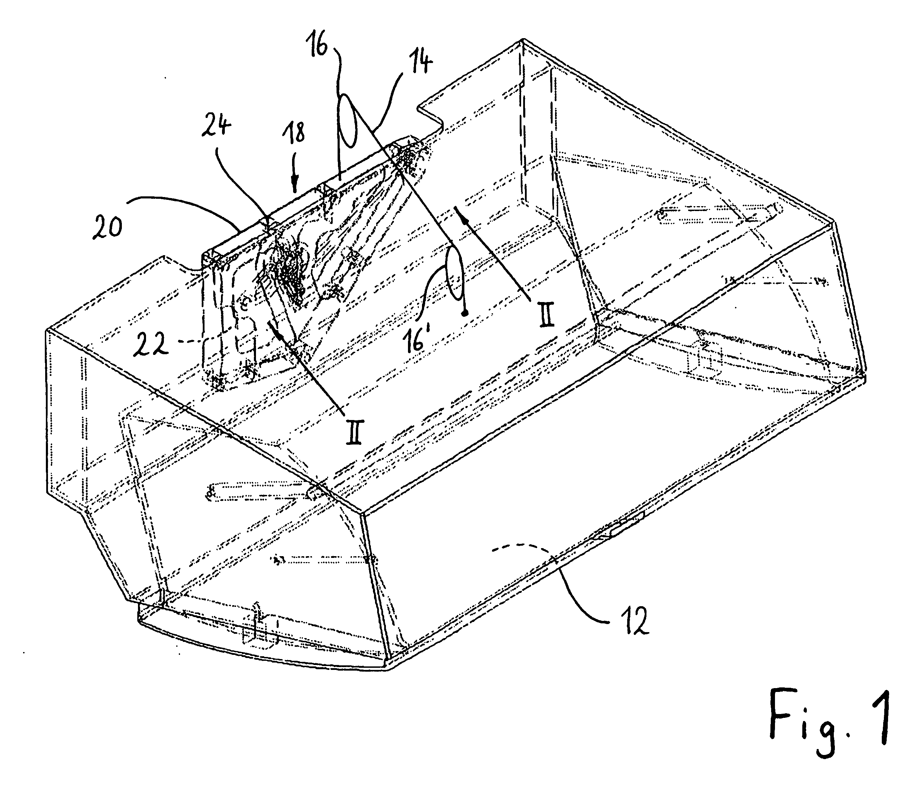

Figur 1 zeigt zum besseren Verständnis ein allgemein mit 10 bezeichnetes Kraftunterstützungsmodul, das hinter der Rückseite eines Gehäuses eines absenkbaren Überkopf-Gepäckfaches 12 eines nicht weiter dargestellten Flugzeuges montiert ist. Das Kraftunterstützungsmodul 10 überträgt mittels eines als Kraftübertragungseinrichtung dienenden Seils 14 eine Unterstützungskraft auf das Gepäckfach 12, um die zum Öffnen und Schließen des Gepäckfaches 12 notwendige Kraft auf einem niedrigen Niveau zu halten, unabhängig davon, ob das Gepäckfach 12 leer oder voll beladen ist. Das Seil 14 ist mit seinem einen Ende im Kraftunterstützungsmodul 10 und mit seinem anderen Ende am Gepäckfach 12 befestigt und über zwei hier nur angedeutete Umlenkrollen 16, 16' geführt.

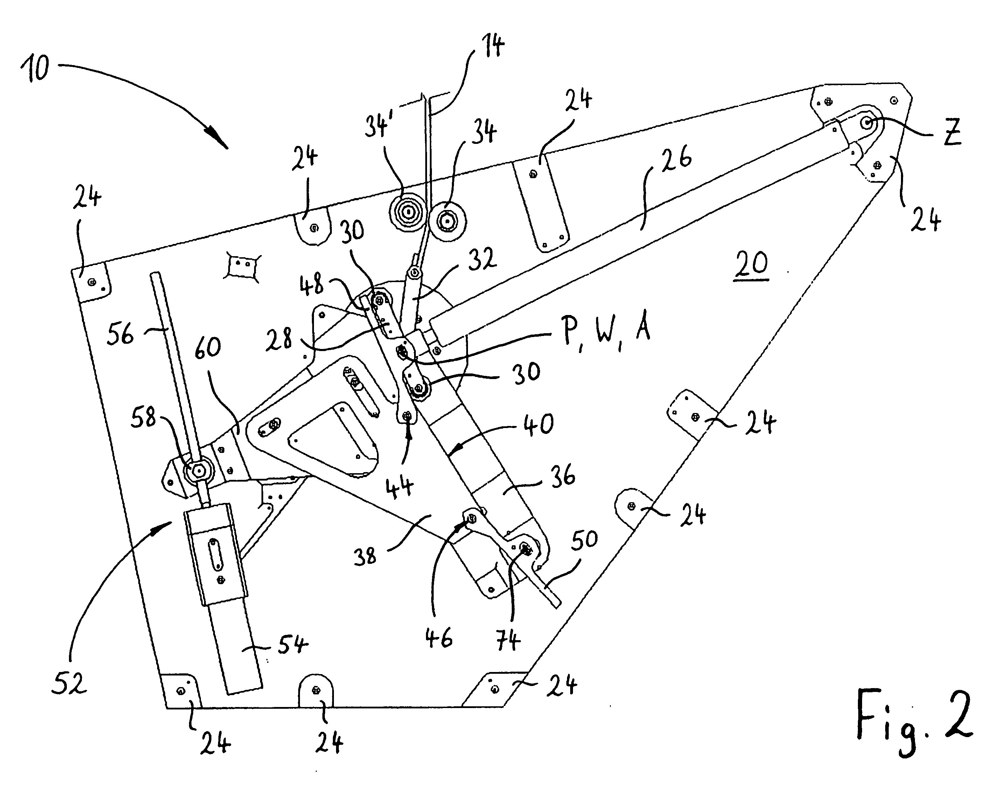

Das Kraftunterstützungsmodul 10 hat ein Gehäuse 18, das zwei zueinander parallele Deckplatten 20, 22 aufweist, die mit Distanzelementen 24 (siehe Fig. 2) verbunden sind und durch letztere in einem definierten Abstand voneinander gehalten werden. Die Deckplatten 20, 22 können geschlossen oder, wie in Figur 1 dargestellt, mit Durchbrechungen zur Gewichtsersparnis ausgeführt sein.

Figur 2 zeigt die Ansicht II-II aus Figur 1 bei abgenommener Deckplatte 22. Eine als Federsystem zur Erzeugung einer Unterstützungskraft dienende Gasdruckfeder 26 ist mit ihrem einen Ende im Gehäuse 18 (siehe Fig. 1) nahe einer Ecke desselben so angelenkt, dass sie um eine Achse Z schwenkbar ist, die die beiden Deckplatten 20 und 22 im rechten Winkel schneidet. Das entgegengesetzte, freie Ende der Gasdruckfeder 26, an dem ihre Kraft abgegeben wird, legt einen Kraftangriffspunkt P für die Unterstützungskraft fest. An dem kraftabgebenden freien Ende der Gasdruckfeder 26 ist ein sich in Figur 2 rechtwinklig zur Gasdruckfeder 26 erstreckender Schlitten 28 so befestigt, dass er um eine zur Achse Z parallele Achse W schwenkbar ist, die den Kraftangriffspunkt P enthält. An seinen beiden Enden ist der Schlitten 28 mit je einer Rolle 30 versehen. Das Seil 14 ist mittels eines Koppelelementes 32 an dem Schlitten 28 befestigt. Dabei ist das Koppelelement 32 so am Schlitten 28 angebracht, dass es um die Achse W drehbar ist. Das Koppelelement 32 und das Seil 14, das sich von zwei Führungsrollen 34, 34' geführt aus dem Gehäuse 18 heraus erstreckt, bilden zusammen die Kraftübertragungseinrichtung.

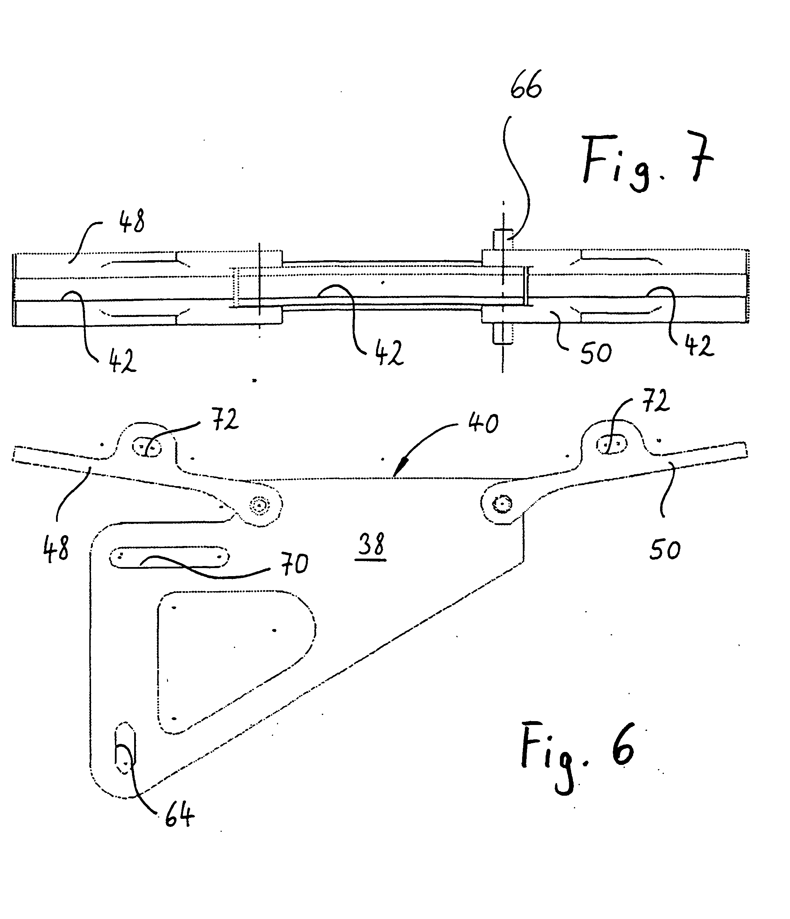

Im Gehäuse 18 des Kraftunterstützungsmoduls 10 ist eine hier plattenförmige Abstützung 36 gelagert, die um die Achse W drehbar ist. Auf der Abstützung 36 ist eine relativ zur Abstützung 36 verschiebbare Steuerplatte 38 angeordnet, die genauer in den Figuren 6 und 7 gezeigt ist.

Die dem Schlitten 28 zugewandte Schmalseite der Steuerplatte 38 bildet eine Bahn 40, auf der der Schlitten 28 zwischen einem ersten Endpunkt A und einem zweiten Endpunkt B hin- und her rollen kann. Die Bahn 40 besteht im dargestellten Ausführungsbeispiel aus drei Abschnitten. Der mittlere Abschnitt der Bahn 40 ist durch die dem Schlitten 28 zugewandte Schmalseite des zentralen Teils der Steuerplatte 38 gebildet, in die eine Nut 42 gearbeitet ist, die die Rollen 30 des Schlittens 28 aufnehmen und führen kann. Die beiden Endabschnitte der Bahn 40 sind durch je einen bei 44 bzw. 46 gelenkig mit der Steuerplatte 38 verbundenen Hebel 48 bzw. 50 gebildet (siehe insbesondere die Figuren 6 und 7). Die Nut 42 setzt sich auf den dem Schlitten 28 zugewandten Flächen der Hebel 48 und 50 fort (Figur 7).

Zum Verdrehen der Abstützung 36 um die Achse W ist im Gehäuse 18 des Kraftunterstützungsmoduls 10 eine Verstelleinrichtung 52 vorgesehen, deren wesentliche Bestandteile ein Elektromotor 54 und eine Spindel 56 sind, die von dem Elektromotor 54 in Drehung versetzt werden kann. Die Spindel 56 wirkt mit einer Spindelmutter 58 zusammen, die auf einem Arm 60 der Abstützung 36 so angebracht ist, dass sie sich um eine zur Achse W parallele Achse drehen kann. Die Spindel 56 und die Spindelmutter 58 bilden zusammen einen Spindeltrieb. Eine Drehung der Spindel 56 bewirkt je nach Drehrichtung ein Herausschrauben oder Hereinschrauben der Spindelmutter 58 und damit eine Verdrehung der Abstützung 36 um die Achse W.

Im Folgenden wird die Funktion des Kraftunterstützungsmoduls 10 näher erläutert. In Figur 2 ist eine Ausgangsstellung wiedergegeben, in der sich der Kraftangriffspunkt P im ersten Endpunkt A der Bahn 40 befindet. Die Abstützung 36 nimmt die in Figur 2 gezeigte, unverdrehte Stellung ein. Der in Figur 2 wiedergegebene Zustand entspricht einem unbeladenen und offenen Zustand des Überkopf-Gepäckfaches 12. In dieser Offenstellung liegen der Kraftangriffspunkt P und der erste Endpunkt A auf der Drehachse W der Abstützung 36 und des Schlittens 28. Ein nicht dargestellter Kraftsensor erfasst in der Offenstellung die Differenz zwischen der Gewichtskraft des Gepäckfachs 12 und der Unterstützungskraft des Kraftunterstützungsmoduls 10 und leitet ein entsprechendes Steuersignal über eine Steuereinrichtung (nicht dargestellt) zur Verstelleinrichtung 52. Ist das Überkopf-Gepäckfach 12 leer, erfolgt keine Verdrehung der Abstützung 36 aus der in Figur 2 dargestellten Position.

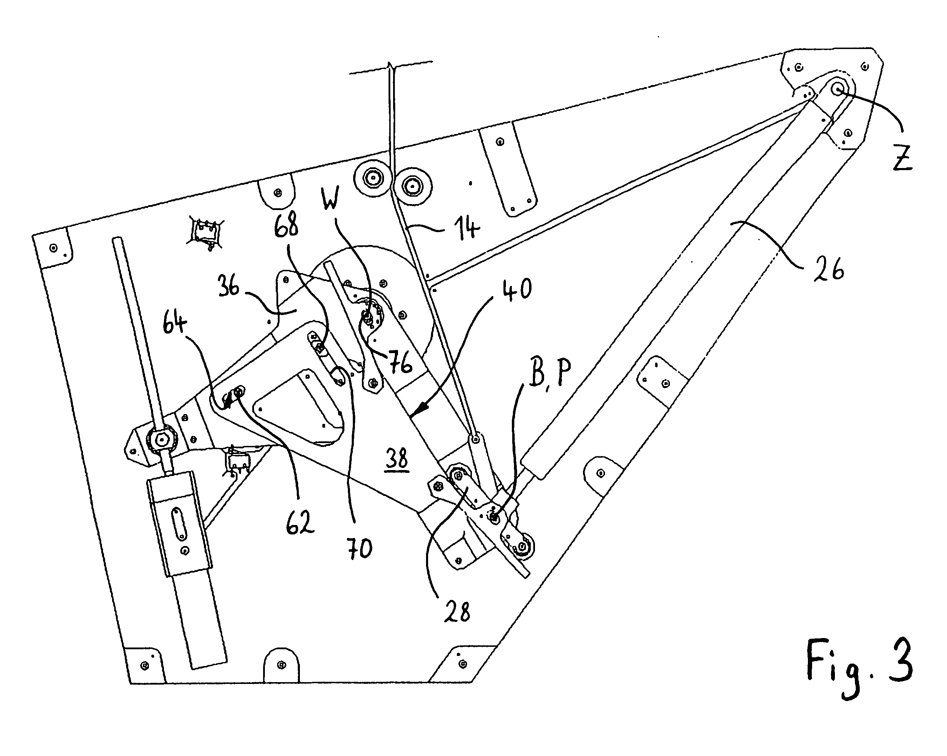

Wird das leere Überkopf-Gepäckfach 12 geschlossen, rollt der Schlitten 28 auf der Bahn 40 vom ersten Endpunkt A zum zweiten Endpunkt B (siehe Figur 3), der mit einer Schließstellung des Überkopf-Gepäckfaches 12 korrespondiert. Während des Schließvorganges ist eine den Schließvorgang unterstützende Kraft wirksam, die der in Richtung des Seils 14 wirkenden Kraftkomponente der Gasdruckfederkraft entspricht. Aufgrund der wie in den Figuren 2 und 3 dargestellt kreisringsektorförmigen Bahn 40 bleibt diese Unterstützungskraft während des gesamten Weges vom ersten Endpunkt A zum zweiten Endpunkt B annähernd gleich.

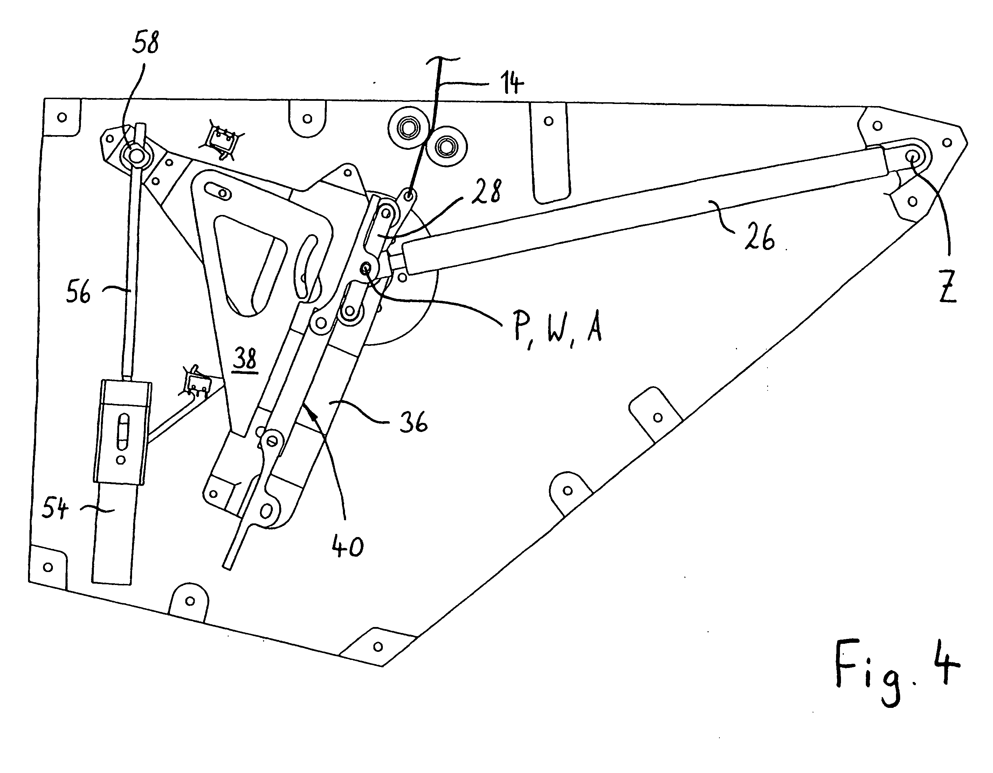

Wird hingegen in der Offenstellung mittels des Kraftsensors festgestellt, dass das Überkopf-Gepäckfach 12 beladen ist, erfolgt noch in der Offenstellung mittels der Verstelleinrichtung 52 eine Verdrehung der Abstützung 36 im Urzeigersinn entsprechend dem festgestellten Beladungszustand des Gepäckfachs 12. In Figur 4 ist ein Zustand dargestellt, wie er sich bei offenem und voll beladenem Gepäckfach 12 einstellt. Die Spindelmutter 58 ist in diesem Zustand nahezu vollständig herausgeschraubt, die Abstützung 36 folglich um den maximal möglichen Winkel verdreht.

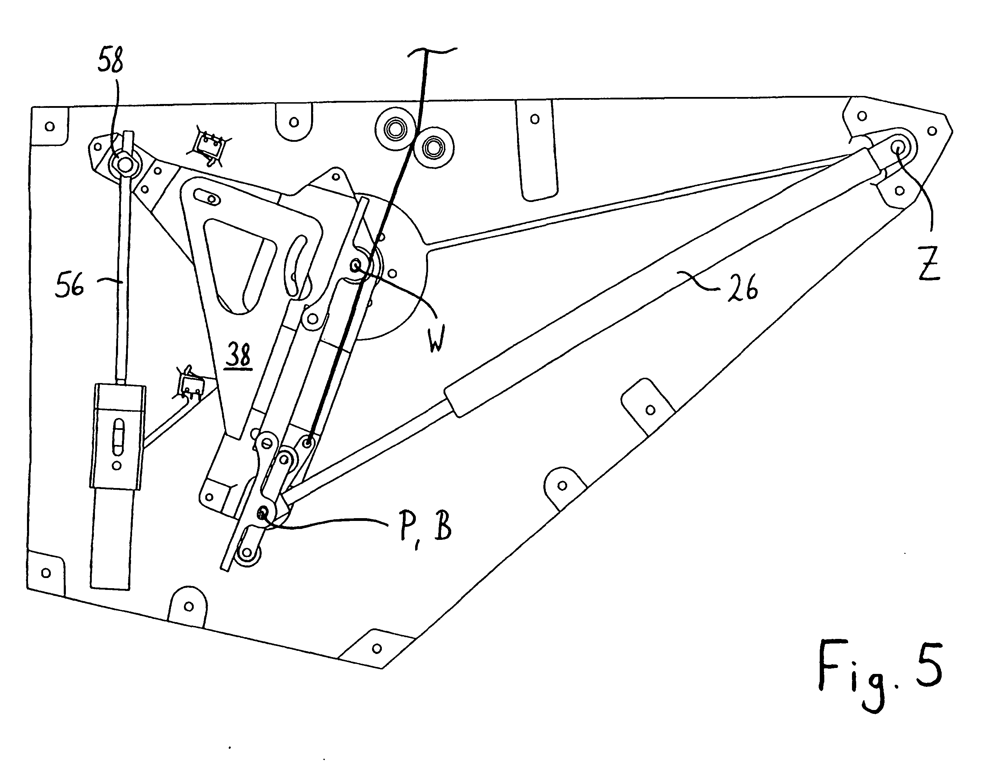

Wie aus Figur 4 ersichtlich, verkleinert sich durch die Verdrehung der Abstützung 36 der Winkel zwischen der Kraftangriffsrichtung der von der Gasdruckfeder 26 im Kraftangriffspunkt P ausgeübten Kraft und dem Seil 14. Dadurch erhöht sich die in Seilrichtung wirkende Kraftkomponente der Gasdruckfederkraft entsprechend, was nichts anderes bedeutet, als dass die beim folgenden Schließvorgang mittels des Seils 14 auf das Gepäckfach 12 übertragene Unterstützungskraft entsprechend größer ist. Das Gepäckfach 12 lässt sich also trotz seiner Beladung von einem Benutzer mit derselben Kraft schließen, die auch zum Schließen eines leeren Gepäckfachs 12 erforderlich ist. Den Schließzustand bei voller Beladung zeigt Figur 5, der Kraftangriffspunkt P befindet sich am zweiten Endpunkt B der Bahn 40 (siehe Figur 3). Aufgrund der Kreisringsektorform der Bahn 40 ändert sich die Kraftunterstützung beim Schließvorgang nicht.

Mittels der Verstelleinrichtung 52 kann jede zwischen der unverdrehten Position gemäß den Figuren 2 und 3 und der maximal verdrehten Position gemäß den Figuren 4 und 5 liegende Verdrehstellung der Abstützung 36 erzielt werden. Die auf das Gepäckfach 12 wirkende Unterstützungskraft lässt sich somit stufenlos dem Beladungszustand anpassen.

Hingewiesen sei an dieser Stelle darauf, dass die Verdrehung der Abstützung 36 nur in der Offenstellung erfolgt, in der sich der Kraftangriffspunkt P am ersten Endpunkt A der Bahn 40 befindet. Weil in dem hier gezeigten Ausführungsbeispiel in der Offenstellung der Kraftangriffspunkt P und der erste Endpunkt A auf der Drehachse W der Abstützung 36 und des Schlittens 28 liegen, kommt es bei einer Verdrehung der Abstützung 36 zu keiner Stauchung oder Streckung der Gasdruckfeder 26, weshalb die Verdrehung der Abstützung 36 einen nur geringen Energieaufwand benötigt.

Bei der vorstehenden Funktionsbeschreibung wurde zunächst unterstellt, dass die Form der Bahn 40 sich nicht ändert. Alternativ ist es jedoch möglich, die Form der Bahn 40 in Abhängigkeit des Verdrehwinkels der Abstützung 36 zu ändern. Um dies zu erreichen, ist die Steuerplatte 38 auf der Abstützung 36 zwangsgeführt, indem zum einen ein auf dem Arm 60 der Abstützung 36 befestigter Stift 62 in eine Kulisse 64 der Steuerplatte 38 ragt und ein Stift 66 des Hebels 50 (siehe Figur 7) in eine entsprechende, in den Figuren nicht sichtbare Kulisse der Abstützung 36 ragt, und zum anderen ein gehäusefester Stift 68 durch die Abstützung 36 in eine weitere Kulisse 70 der Steuerplatte 38 ragt. Aufgrund dieser Anordnung führt eine aus der Ausgangsstellung gemäß Figur 2 erfolgende Verdrehung der Abstützung 36 zu einer Relatiwerschiebung der Steuerplatte 38 gegenüber der Abstützung 36 in einem die Bahn 40 begradigenden Sinne. Die beiden Hebel 48 und 50 sind hierzu mit je einem Langloch 72 (siehe Figur 6) versehen, in das beim Hebel 50 ein auf der Abstützung 36 befestigter Führungsvorsprung 74 ragt (siehe Fig. 2). Beim Hebel 48 ragt je ein an den Gehäusehälften 20 und 22 befestigter Zapfen 76 (siehe Fig. 3) in das Langloch 72. Die Hebel 48, 50 können deshalb der in Richtung auf den Schlitten 28 erfolgenden Relatiwerschiebung der Steuerplatte 38 folgen, wodurch die Bahn 40 zunehmend geradliniger wird, bis sie bei maximalem Verdrehungswinkel der Abstützung 36 eine Gerade ist. Die Figuren 4 und 5 zeigen diesen Zustand.

Je gerader die Bahn 40 wird, umso mehr ändert sich die auf das Seil 14 wirkende Unterstützungskraft während einer Verschiebung des Kraftangriffspunktes P vom ersten Endpunkt A zum zweiten Endpunkt B, weil im Verlaufe dieser Verschiebung der Winkel zwischen dem Seil 14 und der Kraftangriffsrichtung im Kraftangriffspunkt P zunehmend kleiner wird. Die auf das Gepäckfach 12 wirkende Unterstützungskraft nimmt demnach bei Annäherung an die Schließstellung zu und kann so gewählt sein, dass sie die Gewichtskraft des Gepäckfaches 12 kurz vor Erreichen der Schließstellung überkompensiert, wodurch sich das Gepäckfach 12 selbsttätig schließt.

## Patentansprüche

1. Kraftunterstützungsmodul (10) zur Bereitstellung einer lastabhängigen Unterstützungskraft, insbesondere für ein absenkbares Überkopf-Gepäckfach in einem Flugzeug, mit
- einem Gehäuse (18),
- einem Federsystem zur Erzeugung der Unterstützungskraft, dessen eines Ende in dem Gehäuse (18) um eine Achse (Z) schwenkbar angelenkt ist und dessen entgegengesetztes anderes Ende einen Kraftangriffspunkt (P) festlegt,
- einer am oder in der Nähe des Kraftangriffspunktes (P) befestigten Kraftübertragungseinrichtung zur Übertragung von Unterstützungskraft an einen von dem Kraftunterstützungsmodul entfernten Ort,
- einer im Gehäuse (18) drehbar gelagerten Abstützung (36), auf der eine Bahn (40) bereitgestellt ist, längs derer der Kraftangriffspunkt (P) zwischen einem ersten Endpunkt (A) und einem zweiten Endpunkt (B) hin- und her verschiebbar ist, und
- einer mit der Abstützung (36) und einem Lastsensor zusammenwirkenden Verstelleinrichtung (52), die die Abstützung (36) in Abhängigkeit der von dem Lastsensor festgestellten Last verdreht, um den Winkel zwischen der Kraftangriffsrichtung der Unterstützungskraft im Kraftangriffspunkt (P) und der Kraftübertragungseinrichtung zu verändern und so das Maß der auf die Kraftübertragungseinrichtung wirkenden Unterstützungskraft der festgestellten Last anzupassen.

2. Kraftunterstützungsmodul nach Anspruch 1,
**dadurch gekennzeichnet, dass** das Federsystem eine Gasdruckfeder (26) ist.

3. Kraftunterstützungsmodul nach Anspruch 1 oder 2,
**dadurch gekennzeichnet, dass** ein Schlitten (28) mit dem kraftabgebenden Ende des Federsystems verbunden ist, an dem die Kraftübertragungseinrichtung befestigt ist, und dass der Schlitten (28) auf der Bahn (40) hin- und her verschiebbar ist.

4. Kraftunterstützungsmodul nach Anspruch 3,
**dadurch gekennzeichnet, dass** der Schlitten (28) auf der Bahn (40) abrollt.

5. Kraftunterstützungsmodul nach einem der vorhergehenden Ansprüche,
**dadurch gekennzeichnet, dass** der erste Endpunkt (A) einer Offenstellung und der zweite Endpunkt (B) einer Schließstellung entspricht.

6. Kraftunterstützungsmodul nach Anspruch 5,
**dadurch gekennzeichnet, dass** eine Verdrehung der Abstützung (36) mittels der Verstelleinrichtung (52) nur erfolgt, wenn sich der Kraftangriffspunkt (P) in dem ersten Endpunkt (A) befindet.

7. Kraftunterstützungsmodul nach Anspruch 6,
**dadurch gekennzeichnet, dass** der Kraftangriffspunkt (P) und der erste Endpunkt (A) auf der Drehachse (W) der Abstützung (36) liegen.

8. Kraftunterstützungsmodul nach einem der vorhergehenden Ansprüche,
**dadurch gekennzeichnet, dass** die Bahn (40) ein Teil einer Kreisbahn ist.

9. Kraftunterstützungsmodul nach einem der Ansprüche 1 bis 7,
**dadurch gekennzeichnet, dass** die Form der Bahn (40) sich in Abhängigkeit der Verdrehung der Abstützung (36) ändert.

10. Kraftunterstützungsmodul nach Anspruch 9,
**dadurch gekennzeichnet, dass** die Bahn (40) aus mehreren gelenkig miteinander verbundenen Abschnitten besteht, und dass eine relativ zur Abstützung (36) verschiebbare und mit den Abschnitten verbundene Steuerplatte (38) die Position der einzelnen Abschnitte zueinander in Abhängigkeit der Verdrehung der Abstützung (36) verändert.

11. Kraftunterstützungsmodul nach Anspruch 10,
**dadurch gekennzeichnet, dass** die Steuerplatte (38) auf der Abstützung (36) zwangsgeführt ist.

12. Kraftunterstützungsmodul nach Anspruch 10 oder 11,
**dadurch gekennzeichnet, dass** die Steuerplatte (38) einen Abschnitt der Bahn (40) bildet.

13. Kraftunterstützungsmodul nach einem der Ansprüche 9 bis 12,
**dadurch gekennzeichnet, dass** die Form der Bahn (40) bei keiner oder geringer Last kreisringsektorförmig ist und mit zunehmender Last immer geradliniger wird.

14. Kraftunterstützungsmodul nach einem der vorhergehenden Ansprüche,
**dadurch gekennzeichnet, dass** die Verstelleinrichtung (52) einen Spindeltrieb umfasst, der durch die Drehung seiner Spindel (56) die Abstützung (36) hin- und her verdreht.

15. Kraftunterstützungsmodul nach Anspruch 14,
**dadurch gekennzeichnet, dass** die Spindel (56) von einem Elektromotor (54) in Drehung versetzt wird.

16. Kraftunterstützungsmodul nach Anspruch 15,
**dadurch gekennzeichnet, dass** der Elektromotor (54) ein Schrittmotor ist.

17. Kraftunterstützungsmodul nach einem der vorhergehenden Ansprüche,
**dadurch gekennzeichnet, dass** die Kraftübertragungseinrichtung ein Seil (14) ist.

18. Kraftunterstützungsmodul nach einem der vorhergehenden Ansprüche,
**dadurch gekennzeichnet, dass** das Maß der auf die Kraftübertragungseinrichtung wirkenden Unterstützungskraft bei einer Verschiebung des Kraftangriffspunktes (P) zwischen dem ersten Endpunkt (A) und dem zweiten Endpunkt (B) gleich bleibt.

19. Kraftunterstützungsmodul nach einem der Ansprüche 1 bis 18,
**dadurch gekennzeichnet, dass** das Maß der auf die Kraftübertragungseinrichtung wirkenden Unterstützungskraft bei einer Verschiebung des Kraftangriffspunktes (P) von dem ersten Endpunkt (A) zum zweiten Endpunkt (B) zunimmt.

20. Kraftunterstützungsmodul nach Anspruch 19,
**dadurch gekennzeichnet, dass** das Maß der auf die Kraftübertragungseinrichtung wirkenden Unterstützungskraft kurz vor Erreichen des zweiten Endpunktes (B) der festgestellten Last entspricht oder sie geringfügig übertrifft.

21. Kraftunterstützungsmodul nach einem der vorhergehenden Ansprüche,
**dadurch gekennzeichnet, dass** das Gehäuse (18) zwei im Abstand voneinander gehaltene Deckplatten (20, 22) aufweist, zwischen denen das Federsystem, die drehbare Abstützung (36) und die Verstelleinrichtung (52) angeordnet sind.

## Claims

1. Force assistance module (10) for providing a load-dependent assistance force, in particular for a lowerable overhead luggage compartment in an aircraft, comprising
- a housing (18),
- a spring system for generating the assistance force, of which spring system one end is coupled pivotally about an axis (Z) in the housing (18) and the other, opposite end defines a force application point (P),
- a force-transmitting device fastened to or in the vicinity of the force application point (P) for transmitting assistance force to a location remote from the force assistance module,
- a support (36), which is mounted rotatably in the housing (18) and on which a path (40) is provided, along which the force application point (P) is displaceable back and forth between a first end point (A) and a second end point (B), and
- an adjusting device (52), which interacts with the support (36) and a load sensor and which as a function of the load detected by the load sensor rotates the support (36) in order to vary the angle between the force application direction of the assistance force at the force application point (P) and the force-transmitting device and hence adapt the value of the assistance force acting upon the force-transmitting device to the detected load.

2. Force assistance module according to claim 1,
**characterized in that** the spring system is a pneumatic pressure spring (26).

3. Force assistance module according to claim 1 or 2,
**characterized in that** a slide (28) is connected to the force-releasing end of the spring system, to which the force-transmitting device is fastened, and that the slide (28) is displaceable back and forth along the path (40).

4. Force assistance module according to claim 3,
**characterized in that** the slide (28) rolls along the path (40).

5. Force assistance module according to one of the preceding claims,
**characterized in that** the first end point (A) corresponds to an open position and the second end point (B) corresponds to a closed position.

6. Force assistance module according to claim 5,
**characterized in that** rotating of the support (36) by means of the adjusting device (52) is effected only when the force application point (P) is situated at the first end point (A).

7. Force assistance module according to claim 6,
**characterized in that** the force application point (P) and the first end point (A) lie on the axis of rotation (W) of the support (36).

8. Force assistance module according to one of the preceding claims,
**characterized in that** the path (40) is part of a circular path.

9. Force assistance module according to one of claims 1 to 7,
**characterized in that** the shape of the path (40) alters as a function of the rotating of the support (36).

10. Force assistance module according to claim 9,
**characterized in that** the path (40) comprises a plurality of sections connected in an articulated manner to one another, and that a control plate (38), which is displaceable relative to the support (36) and connected to the sections, varies the position of the individual sections relative to one another as a function of the rotating of the support (36).

11. Force assistance module according to claim 10,
**characterized in that** the control plate (38) is guided in a restricted manner on the support (36).

12. Force assistance module according to claim 10 or 11,
**characterized in that** the control plate (38) forms a section of the path (40).

13. Force assistance module according to one of claims 9 to 12,
**characterized in that** the shape of the path (40), given no load or low load, is the shape of a sector of an annulus and, with increasing load, becomes progressively more rectilinear.

14. Force assistance module according to one of the preceding claims,
**characterized in that** the adjusting device (52) comprises a spindle drive, which through rotation of its spindle (56) rotates the support (36) back and forth.

15. Force assistance module according to claim 14,
**characterized in that** the spindle (56) is set in rotation by an electric motor (54).

16. Force assistance module according to claim 15,
**characterized in that** the electric motor (54) is a stepping motor.

17. Force assistance module according to one of the preceding claims,
**characterized in that** the force-transmitting device is a cable (14).

18. Force assistance module according to one of the preceding claims,
**characterized in that** the value of the assistance force acting upon the force-transmitting device remains constant during a displacement of the force application point (P) between the first end point (A) and the second end point (B).

19. Force assistance module according to one of claims 1 to 18,
**characterized in that** the value of the assistance force acting upon the force-transmitting device increases during a displacement of the force application point (P) from the first end point (A) to the second end point (B).

20. Force assistance module according to claim 19,
**characterized in that** shortly before the second end point (B) is attained, the value of the assistance force acting upon the force-transmitting device corresponds to or slightly exceeds the detected load.

21. Force assistance module according to one of the preceding claims,
**characterized in that** the housing (18) comprises two cover plates (20, 22) which are held at a distance from one another and between which the spring system, the rotatable support (36) and the adjusting device (52) are disposed.

## Revendications

1. Module de servo-assistance (10) destiné à fournir une force d'assistance en fonction d'une charge, notamment pour un compartiment à bagages abaissable monté au plafond d'un avion, comprenant
- un boîtier (18),
- un système à ressort pour produire ladite force d'assistance, une extrémité de ce système étant montée articulée dans le boîtier (18) de manière à pouvoir pivoter autour d'un axe (Z) et son extrémité opposée déterminant un point d'application d'une force (P),
- un dispositif de transmission de force fixé au niveau ou à proximité du point d'application d'une force (P) pour transmettre une force d'assistance à un lieu éloigné du module de servo-assistance,
- un appui (36) monté pivotant dans le boîtier (18) et sur lequel se trouve une glissière (40) le long de laquelle le point d'application d'une force (P) effectue un mouvement de va-et-vient entre un premier point d'extrémité (A) et un second point d'extrémité (B), et
- un dispositif d'ajustage (52) coopérant avec l'appui (36) et un capteur de charge, ledit dispositif faisant pivoter l'appui (36) en fonction de la charge déterminée par le capteur afin de faire varier l'angle entre le sens d'application de la force d'assistance au point d'application d'une force (P) et le dispositif de transmission de force et d'adapter ainsi la grandeur de la force d'assistance agissant sur le dispositif de transmission de force en fonction de la charge enregistrée.

2. Module de servo-assistance selon la revendication 1,
**caractérisé en ce que** le système à ressort est un ressort à gaz (26).

3. Module de servo-assistance selon la revendication 1 ou 2,
**caractérisé en ce qu'**un chariot (28) est relié à l'extrémité du système à ressort qui fournit une force et à laquelle est fixé le dispositif de transmission de force, et **en ce que** le chariot effectue un mouvement de va-et-vient le long de la glissière (40).

4. Module de servo-assistance selon la revendication 3,
**caractérisé en ce que** le chariot (28) roule sur la glissière (40).

5. Module de servo-assistance selon l'une des revendications précédentes,
**caractérisé en ce que** le premier point d'extrémité (A) correspond à une position ouverte et le second point d'extrémité (B) à une position fermée.

6. Module de servo-assistance selon la revendication 5,
**caractérisé en ce qu'**il y a pivotement de l'appui (36) à l'aide du dispositif d'ajustage (52) uniquement lorsque le point d'application d'une force (P) se trouve au premier point d'extrémité (A).

7. Module de servo-assistance selon la revendication 6,
**caractérisé en ce que** le point d'application d'une force (P) et le premier point d'extrémité (A) se situent sur l'axe de pivotement (W) de l'appui (36).

8. Module de servo-assistance selon l'une des revendications précédentes,
**caractérisé en ce que** la glissière (40) est partie intégrante d'une glissière circulaire.

9. Module de servo-assistance selon l'une des revendications 1 à 7,
**caractérisé en ce que** la forme de la glissière (40) varie en fonction du pivotement de l'appui (36).

10. Module de servo-assistance selon la revendication 9,
**caractérisé en ce que** la glissière (40) se compose de plusieurs segments reliés articulés les uns aux autres, et **en ce qu'**une plaque de commande (38) reliée auxdits segments et capable de se déplacer par rapport à l'appui (36) modifie la position des différents segments les uns par rapport aux autres en fonction du mouvement de pivotement effectué par l'appui (36).

11. Module de servo-assistance selon la revendication 10,
**caractérisé en ce que** la plaque de commande (38) est guidée par guidage forcé sur l'appui (36).

12. Module de servo-assistance selon la revendication 10 ou 11, **caractérisé en ce que** la plaque de commande (28) forme un segment de la glissière (40).

13. Module de servo-assistance selon l'une des revendications 9 à 12,
**caractérisé en ce que** la glissière (40) présente, sans charge ou sous faible charge, la forme d'un secteur torique et devient toujours plus rectiligne à charge croissante.

14. Module de servo-assistance selon l'une des revendications précédentes,
**caractérisé en ce que** le dispositif d'ajustage (52) comprend une commande à broche à vis qui fait pivoter l'appui (36) suite à la rotation de la broche (56).

15. Module de servo-assistance selon la revendication 14,
**caractérisé en ce que** la rotation de la broche (56) est assurée par un électromoteur (54).

16. Module de servo-assistance selon la revendication 15,
**caractérisé en ce que** l'électromoteur (54) est un moteur pas à pas.

17. Module de servo-assistance selon l'une des revendications précédentes,
**caractérisé en ce que** le dispositif de transmission de force est un câble (14).

18. Module de servo-assistance selon l'une des revendications précédentes,
**caractérisé en ce que** la grandeur de la force d'assistance agissant sur le dispositif de transmission de force reste la même lors du déplacement du point d'application d'une force (P) entre le premier point d'extrémité (A) et le second point d'extrémité (B).

19. Module de servo-assistance selon l'une des revendications 1 à 18,
**caractérisé en ce que** la grandeur de la force d'assistance agissant sur le dispositif de transmission de force s'accroît lors du déplacement du point d'application d'une force (P) du premier point d'extrémité (A) vers le second point d'extrémité (B).

20. Module de servo-assistance selon la revendication 19,
**caractérisé en ce que** la grandeur de la force d'assistance agissant sur le dispositif de transmission de force correspond ou est légèrement supérieure à la charge enregistrée peu avant d'atteindre le second point d'extrémité (B).

21. Module de servo-assistance selon l'une des revendications précédentes,
**caractérisé en ce que** le boîtier (18) présente deux plaques de couverture (20, 22) maintenues à distance l'une de l'autre et entre lesquelles sont disposés le système à ressort, l'appui pivotant (36) et le dispositif d'ajustage (52).
